Europäisches Patentamt

European Patent Office

Office européen des brevets

(19)

(11) Veröffentlichungsnummer : **0 432 653 B1**

(12) ## EUROPÄISCHE PATENTSCHRIFT

(45) Veröffentlichungstag der Patentschrift :
**01.12.93 Patentblatt 93/48**

(51) Int. Cl.⁵ : **C03C 17/00, C03C 17/04, C04B 41/85**

(21) Anmeldenummer : **90123502.8**

(22) Anmeldetag : **07.12.90**

(54) **Verfahren zur Herstellung von Grossflächendekoren auf Glas, Glaskeramik oder Keramiken und dekorierten Glaskeramikplatten.**

(30) Priorität : **15.12.89 DE 3941436**

(43) Veröffentlichungstag der Anmeldung :
**19.06.91 Patentblatt 91/25**

(45) Bekanntmachung des Hinweises auf die
Patenterteilung :
**01.12.93 Patentblatt 93/48**

(84) Benannte Vertragsstaaten :
**AT BE CH DE FR GB IT LI**

(56) Entgegenhaltungen :
**EP-A- 0 342 271
DD-A- 201 136
DE-A- 2 026 007
DE-A- 2 658 682**

(73) Patentinhaber : **Schott Glaswerke
Hattenbergstrasse 10
D-55122 Mainz (DE)**
(84) **BE CH DE FR IT LI AT**

Patentinhaber : **Carl-Zeiss-Stiftung trading as
SCHOTT GLASWERKE
Hattenbergstrasse 10
D-55122 Mainz (DE)**
(84) **GB**

(72) Erfinder : **Arfsten, Nanning, Dr.
Helmerichstrasse 35
W-6531 Ockenheim (DE)**
Erfinder : **Kristen, Klaus
Emser Strasse 7
W-6200 Wiesbaden (DE)**
Erfinder : **Rodek, Erich, Dr.
Katzenberg 67
W-6500 Mainz-Finthen (DE)**
Erfinder : **Scheidler, Herwig
Zeisigweg 5
W-6500 Mainz-Finthen (DE)**
Erfinder : **Weinberg, Waldemar, Dr.
Heuerstrasse 25d
W-6500 Mainz-Hechtsheim (DE)**

(74) Vertreter : **Dr. Fuchs, Dr. Luderschmidt Dr.
Mehler, Dipl.-Ing. Weiss Patentanwälte
Postfach 46 60 Abraham-Lincoln-Strasse 7
D-65036 Wiesbaden (DE)**

EP 0 432 653 B1

## Beschreibung

Die vorliegende Erfindung betrifft ein Verfahren zur Herstellung von weitgehend spannungsfreien Großflächendekoren auf Substraten aus Glaskeramik, Borosilikatglas, Keramik oder ähnlichem Material mit Schichten aus keramischen Farben, Schmelzflüssen, Sintergläsern, Glasuren, Dickschichtfilmen oder Resinaten, die auf die Substratoberfläche aufgebracht werden wobei diese Anordnung dann einer Energiezufuhr unterworfen und hierdurch soweit erwärmt wird, bis durch Erweichen bzw. Schmelzen der Schichtmaterialien der angestrebte Aufschmelz- bzw. Einbrenneffekt erzielt ist und die Anordnung dann abgekühlt wird. Die Erfindung betrifft auch dekorierte Glaskeramikplatten.

Zur Dekorierung von Glasgegenständen wird nach der Formgebung das Dekor durch Gummistempel, Abziehbilder, Siebdruck etc. auf das kalte Glas aufgebracht und - nach einer eventuellen Vortrocknung - mit einem anschließenden Temperprozeß eingebrannt, wobei Tunnel- oder Haubenöfen mit Gas- oder elektrischer Beheizung zur Anwendung gelangen. In der Regel wird der Dekoreinbrand gleichzeitig mit der Glaskühlung oder bei der Vorspannung der Gläser durchgeführt. Nur in Sonderfällen werden die Dekore in einem eigens dafür vorgesehenen Prozeß eingebrannt, da dies zu einem hohen, zusätzlichen Energieaufwand führt.

Der Dekoreinbrand während der Glaskühlung oder in einem getrennten Einbrennprozeß umfaßt im allgemeinen folgende Abschnitte:

- erste Aufheizphase mit einem bestimmten Temperatur/Zeitverhältnis
- Haltephase zum Ausbrennen der organischen Bestandteile des Dekors
- zweite Aufheizphase mit einem bestimmten Temperatur/Zeit-Verhältnis
- Haltephase bei Maximaltemperatur zum Dekoreinbrand, dabei gleichzeitig Ausgleich von Spannungen im Glas
- Abkühlphase mit Temperaturraten, die von der Wandstärke der Glasgegenstände abhängig sind, bis zu Temperaturen, die ca. 10 bis 20 K unter der unteren Kühltemperatur des jeweiligen Glases liegen
- Abkühlen auf Raumtemperatur mit einem bestimmten Temperatur/Zeit-Verhältnis.

Bei diesen bekannten Verfahren wird zum Dekoreinbrand jeweils der ganze Glaskörper auf die Fließtemperatur des Emails gebracht. Da sich die Gegenstände dabei nicht verformen dürfen, muß gefordert werden, daß die Fließtemperatur des Emails kleiner oder höchstens gleich der oberen Kühltemperatur des Glases ist.

Bei Glaskeramiken erfolgt der Dekoreinbrand in der Regel beim Keramisierungsprozeß, d.h., die Dekore werden auf das Spezialglas (Grünglas) aufgebracht und während der Keramisierung eingebrannt. Nachteilig ist, daß weder der Temperaturgang noch die Ofenatmosphäre für den Dekorbrand optimal eingestellt werden können. Damit bleibt die Auswahl der Farben - abgesehen von den Anpassungsproblemen bezüglich der Wärmeausdehnungskoeffizienten - auf solche Farben beschränkt, die den Keramisierungsprozeß überstehen. Im Bezug auf das Anpassungsproblem können sich Einschränkungen ergeben, wenn das Dekor, wie beispielsweise bei Kochflächen, hohen Temperaturwechselbeanspruchungen und mechanischen Beanspruchungen ausgesetzt ist.

Ein getrennter Dekorbrand, z.B. mit fertig keramisierten Glaskeramiken, zur Optimierung der Einbrandbedingungen erfordert einen hohen Energieaufwand, den zusätzlichen Einsatz von aufwendigen Tunnelöfen und ist daher zu teuer. Er führt zudem zur Verschärfung des Anpassungsproblems.

Die obere Kühltemperatur von Borosilikatgläsern und Natronkalkgläsern ist bei etwa 570°C angesiedelt. Emailfarben, die für diese Gläser geeignet sein sollen müssen, um Deformationen bei dem Emailbrand zu vermeiden, bei Temperaturen unterhalb von 600°C fließen, d. h. Zähigkeiten unter ca. $10^2$ Poise aufweisen. Geeignete Schmelzflüsse, z. B. Bleiborat und/oder Bleigläser, weisen Wärmeausdehnungskoeffizienten im Bereich von $9 \times 10^{-6}$ / K bis $12 \times 10^{-6}$ /K auf.

Weichen die Wärmeausdehnungskoeffizienten des Beschichtungsmaterials und des Substrates voneinander ab, so treten in dem erkalteten Schichtkörper Spannungen auf. Die Schicht mit dem größeren Wärmeausdehnungskoeffizienten wird zuggespannt, die Schicht mit dem vergleichsweise kleineren Wärmeausdehnungskoeffizienten kommt unter den Einfluß von Druckspannungen.

Die Größe dieser Spannungen ist abhängig von der Differenz der Wärmeausdehnungskoeffizienten $\alpha_1$ $\alpha_2$ (beziehungsweise $\alpha_2 - \alpha_1$), von der nach dem Erstarren der beiden Materialien durchlaufenden Temperaturdifferenz zwischen der Raumtemperatur und der niedrigstens Erstarrungstemperatur der beiden Verschmelzpartner $\Delta T$ (Schicht/Substrat), deren Elastizitätsmodulen $E_1$ und $E_2$, Querkontraktionszahlen $\mu_1$ und $\mu_2$ und den Schichtdicken $d_1$ und $d_2$.

Unter Vernachlässigung von Randeffekten gilt für die Spannungen (Index 1 = Schicht; Index 2 = Substrat):
Spannung in der Schicht:

$$\sigma_1 = \frac{(\alpha_1 - \alpha_2)\,\Delta T}{\dfrac{1 - \mu_1}{E_1} + \dfrac{1 - \mu_2}{E_2}\dfrac{d_1}{d_2}}\ N/mm^2$$

Spannung im Substrat:

$$\sigma_2 = \frac{(\alpha_2 - \alpha_1)\,\Delta T}{\dfrac{1 - \mu_2}{E_2} + \dfrac{1 - \mu_1}{E_1}\dfrac{d_2}{d_1}}\ N/mm^2$$

(Formeln aus A.H. Diezel "Emailierung", Seite 133, Verlag Springer 1981).

Um weitgehend spannungsfreie Dekore erhalten zu können, sollten die Wärmeausdehnungskoeffizienten der Substrate und Dekorschichten etwa gleich liegen; dennoch werden Farben auf der Basis von Bleiborat- oder Bleigläsern trotz ihrer nicht immer optimalen Spannungsanpassung auch für die Dekoration von Borosilikatgläsern ($\alpha$ = 3 x $10^{-6}$/K) bzw.

Glaskeramiken ($\alpha$ = $\pm$ 0,2 x $10^{-6}$/K) verwendet, da sie in großer Vielzahl preiswert im Handel erhältlich sind und die erfoderlichen niedrigen Fließtemperaturen unter 600°C aufweisen.

Der gravierende Nachteil der derart fehlangepaßten Emailfarben ist, daß durch die im Email vorliegenden Zugspannungen Krakelees entstehen, deren Einrisse bis in das Substratmaterial einlaufen und dessen Biegezugfestigkeit bis auf etwa 1/3 des ursprünglichen Wertes des unbeschichteten Gegenstandes herabsetzen. Entsprechend werden die Temperaturunterschiedsfestigkeit und die Temperaturwechselbeständigkeit der beschichteten Gegenstände gemindert. Die Beschichtungen neigen dazu, im Laufe der Zeit durch Ausmuscheln von den Gegenständen abzufallen.

Geiger und Urbanek beschreiben in "Glas International", März 1989, Seite 39 f. ein Verfahren zur Dekoration von Glas mit Hilfe von Laserstrahlen.

Auch mit Beschichtungen aus keramischen Farben, beliebigen Schmelzflüssen, Sintergläsern, Glasuren, Resinaten usw. bestehen die gleichen Nachteile, sofern diese Schichten derart fehlangepaßt sind, daß sie unter Zugspannung kommen, d. h., daß der Wärmeausdehnungskoeffizient der Schicht größer ist als der des Substratmaterials.

Dabei wird ein Dekor punktförmig von einem computergesteuerten Laser auf kleine Hohlglasgefäße (Vasen, Trinkgefäße etc.), die zuvor ganzflächig mit der Dekorfarbe, z.B. einer Email, durch Spritzen, Bedrucken, usw. beschichtet wurden, geschrieben. Obwohl es sich um kleine Flächen handelt, dauert dieser Vorgang auf Grund des punktförmigen Einbrennens sehr lange.

In der DD PS 201 136 ist ein ähnliches Verfahren beschrieben, wobei neben den Emailfarben auch Metalloxide, Metallnitride und Metallsalze zur Anwendung kommen, auch hier wird das Dekor mit einem fein fokussierten punktförmigen Laserstrahl mit einer Leistung von 20 bis 200 Watt auf den ganzflächig beschichteten Hohlglasgegenstand gezeichnet.

In Abwandlung dieses Verfahrens werden dünne Metallschablonen des Dekors auf den ganzflächigen beschichteten Gegenstand befestigt, und diese Anordnung durch Abscannen der Schablone mit der Laserenergie beaufschlagt.

Das letztgenannte Verfahren der DD PS 201 136 hat mehrere Nachteile: Die Schablone wird durch die zeilenweise Abtastung mit dem punktförmigen Laserstrahl kurzfristig am Anfang und Ende jeder Zeile jeweils partiell hoch erhitzt. Dadurch treten Verwerfungen und Deformationen, besonders an den Konturenrändern auf, die die Schablone schnell unbrauchbar machen. Je größer die Schablonenfläche ist, desto größer werden die Deformationen durch die partielle Erhitzung, so daß dieses Verfahren, neben den hohen Kosten für die Schablonenherstellung, zur Dekoration großer Flächen ungeeignet ist.

Ein weiterer Nachteil ist, daß hinsichtlich der Dekorgestaltung keine Freizügigkeit gegeben ist, da die von der Schablone abzuschottenden Bereiche untereinander mit Stegen verbunden sein müssen.

Das Abscannen mit einem Laser bei den bisher bekannten Verfahren hat noch den Nachteil, daß die Einbrennzone punktförmig ist, wodurch beim Abfahren der Oberfläche mit dem Laserstrahl zwangsläufig Überlappungszonen entstehen, in denen das Schichtmaterial zweimal geschmolzen wird. Dies bringt eine Anisotropie in die Schicht und in das Material wodurch ein Abmuscheln des Dekors eintreten kann.

Ferner wurde schon ein Laserdekorationsverfahren zur Herstellung farbiger Bilder auf Glas- oder Keramikartikeln vorgeschlagen, bei dem das vorgesehene farbige Bild insgesamt auf den zu dekorierenden Artikel aufgebracht und anschließend mittels eines Laserstrahls fixiert wird, der die gesamte Bildfläche unmittelbar ausleuchtet. Der Nachteil dieses Verfahrens besteht darin, daß ein energieintensiver Laser extrem hoher Leistung mit einem der Bildfläche entsprechenden Strahldurchmesser erforderlich ist, der die gesamte Fläche mit örtlich gleicher Intensität ausleuchten muß. Derartige Laser sind für Produktionsanwendungen heute noch nicht verfügbar und die gleichmäßige Beaufschlagung von $m^2$-großen Flächen durch optisch aufgeweitete Laserstrahlen stößt auf große Schwierigkeiten.

EP 0 432 653 B1

Aus der DE-OS 2026007 ist ein Verfahren bekannt, keramische Materialien durch Anwenden von IR-Strahlung eines $CO_2$-Lasers unter Verschmelzen der Glasierungsmaterialien auf den keramischen Körper ohne Erwärmen desselben zu glasieren, wobei größere Flächen durch Schwingen eines im Laserstrahl angeordneten Spiegels glasiert werden können.

Aufgabe der vorliegenden Erfindung ist es, ein Dekoreinbrandverfahren zur Herstellung von weitgehend spannungsfreien Großflächendekoren auf Borosilikatglas (z.B. Dekoren auf Fensterscheiben für Haushaltsbacköfen) und Glaskeramikscheiben (z.B. Kochflächendekore auf Glaskeramikkochflächen) bereitzustellen, das es gestattet, die Wahl des Schmelzpunktes der Emailfarben unabhängig von der oberen Kühltemperatur bzw. der Erweichungstemperatur oder höchsten Keramisierungstemperatur der verwendeten Trägermaterialien (vorzugsweise Borosilikatglas oder Glaskeramik) vorzunehmen. Dabei sollen insbesondere auch Emailfarben eingesetzt werden können, deren Fließtemperatur wesentlich über der Transformationstemperatur der Trägermaterialien liegt. Ferner soll, insbesondere bei der Dekoration von Glaskeramik, das Einbrennen der Farben von dem Keramisierungsprozess entkoppelt werden können, um auch Dekorfarben einsetzen zu können, die für die bei der Keramisierung auftretenden Temperaturen ungeeignet sind.

Diese Aufgabe wird erfindungsgemäß bei einem gattungsgemäßen Verfahren durch die kennzeichnenden Merkmale des Anspruches 1 gelöst. Die Wärmeausdehnungskoeffizienten von Beschichtung und zu beschichtendem Substrat sind optimal so aufeinander abgestimmt, daß sich weder während des Herstellungsprozeßes in der Übergangszone von Substratoberfläche und Beschichtung, thermisch bedingt, übergroße Spannungen aufbauen noch am fertigen Produkt durch hohe Temperaturwechselspannungen während des bestimmungsgemäßen Einsatzes Rißbildungen auftreten können. Da infolge der nur auf die Dicke der Beschichtung und die Übergangszone auf das Substratoberfläche beschränkten Erhitzung durch die Laserbestrahlung ein Erwärmen des gesamten Substrats über die Transformationstemperatur hinaus, was eine Verformung der Glassubstratfläche zur Folge hätte, vermieden werden kann, können andererseits Emailfarben verwendet werden, deren Schmelztemperaturen weit oberhalb der oberen Kühltemperatur des Substrats liegen können. Die Energiezufuhr zum Aufschmelzen und/oder Einbrennen einer Schicht aus keramischer Farbe, Schmelzfluß, Sinterglas, Glasur, auch in Form eines Dickschichtfilms oder mit einem temporären organischen Bindemittel, wie z.B. einem Resinat, auf einem Substrat aus Glas, Keramik oder ähnlichem Material, vorzugsweise Glaskeramik, von der mit dem Schichtmaterial versehenen Seite her muß dabei pro Flächeneinheit des Subtrats nur mit einer solchen Intensität und Zeitbegrenzung vorgenommen werden, daß im wesentlichen nur die erforderliche Erwärmung des Schichtmaterials und der an dieses angrenzenden Substratoberfläche erfolgt, und die Energiezufuhr bereits wieder unterbrochen ist, bevor der Temperaturgradient der Wärmeleitungsfront sich wesentlich bis in das Substratmaterial hinein verlagern kann. Eine solche Prozeßführung, wo mittels Laserstrahlung im wesentlichen nur die aufzubringende Schicht erhitzt wird, ist in der DE-OS 2026007 beschrieben.

Durch die linienförmige Aufweitung des Laserstrahls über die gesamte Breite des Dekors oder des Substrats und durch das Wandern dieser bandförmigen Zone über das Substrat (bzw. des Substrats unter dieser Zone) wird ein mehrmaliges sich negativ auf die Eigenschaften der aufgeschmolzenen Schicht auswirkendes Aufschmelzen des Schichtmaterials vermieden. Dabei wandert ähnlich wie beim Zonenschmelzverfahren eine bandförmige (linienförmige) Schmelzzone über das Substrat, die von einem schnell abgelenkten Laserstrahl erzeugt wird. Durch die schnelle Ablenkung des Laserstrahls ist das gesamte unter der Zone befindliche Beschichtungsmaterial im aufgeschmolzenen Zustand. Statt eines durch schnelle Ablenkung erzeugten linien- oder bandförmigen Laserstrahls kann natürlich auch ein Laserstrahl verwendet werden, der von Natur aus band- bzw. linienförmig ist, z.B. der Strahl eines Plattenlasers. Sehr zweckmäßig ist auch die Anwendung von linienförmigen Hochleistungsstrahlern z. B. Quarz- Halogen- Lampen, welche Strahlungsleistungen bis zu $150W/cm^2$ hervorbringen und deren Strahlungsschwerpunkt bei einer Wellenlänge von 1,4 µm liegt.

Das Substratmaterial soll dabei einen niedrigen Wärmeleitfähigkeitskoeffizienten haben, der höchstens 4 W/mK, vorzugsweise 1,0-2,5 W/mK betragen soll, und hat eine Dicke von mindestens 0,5 mm, vorzugsweise 2-10 mm. Als Substratmaterial kommt insbesondere Glas bzw. Glaskeramik zur Anwendung, es können aber auch andere Materialien, wie z.B. Keramiken verwendet werden.

Die beschichtete Oberfläche des Substrats, die eine Fläche von 50 cm x 60 cm bis 100 cm x 100 cm, vorzugsweise 50 cm x 60 cm hat, wird dabei nur auf eine Dicke von 0,2-10um, vorzugsweise 2-4 µm auf die Einbrenn- oder Aufschmelztemperatur der Schicht erwärmt, so daß auch chemisch oder thermisch vorgespannte Substrate beschichtet werden können. Die aufgebrachte Schicht hat eine Dicke von 1-10 µm, vorzugsweise 2-4 µm.

Die linienförmige Aufweitung des Laserstrahls erfolgt zweckmäßiger Weise mittels eines Drehspiegels, der mindestens drei, vorzugsweise 6 bis 12 in der Regel jedoch 12 einzelne lückenlos auf einem Zylinder angeordnete Spiegelsegmente enthält. Auch ein an sich linienförmiger Laserstrahl genügend hoher Energie, z.B. aus einem Plattenlaser, kann verwendet werden. Eine solche Vorrichtung ist im wesentlichen bereits aus der DE-OS 2658682 bekannt, wo ein optisches System den Strichfokus eines Strahlenbündels derart auf einem sich bewegenden Werkstück erzeugt, daß die Richtung des Strichfokus rechtwinklig zur Bewegungsrichtung des Werkstücks zu liegen kommt.

Der Drehspiegel projiziert den Laserstrahl quasi in einer Linie auf die zu beschichtende Substratoberfläche, die - um winkelbedingte wesentliche Temperaturunterschiede zu vermeiden - vorzugsweise im wesentlichen planar ist, oder, wie z.B. die Mantelfläche eines Zylinders, beim Abwickeln eine ebene Fläche ergibt, wobei der Laserstrahl unter einem Winkel von 90° bis 85° auf die Substratoberläche auftreffen soll. Da der Beginn und das Ende der von dem Drehspiegel gebildeten Laserlinie aus technischen Gründen meist eine höhere Energiedichte aufweisen, ist eine Ausblendung dieser Bereiche von der Substratoberfläche mittels vorzugsweise luft- oder wassergekühlter Randblenden vorteilhaft.

Der Laserstrahl bzw. die Laserlinie überstreicht dabei die Substratoberfläche vorzugsweise in der gesamten Breite des Dekors, wobei das Dekor ganzflächig die Substratoberfläche abdecken kann oder aus aufgetragenen Punkten, Mustern oder ähnlichem besteht, zwischen denen nicht-dekorierte Substratoberfläche liegt. Der Laserstrahl brennt entsprechend das gesamte auf die Substratoberfläche aufgebrachte Schichtmaterial ein, so daß keine Reste des Sichtmaterials ab- oder ausgewaschen werden müssen. Das Verfahren ist hierdurch wesentlich kostengünstiger als die geschilderten, bekannten Verfahren.

Der Brennfleck des Laserstrahls hat vorteilhafter Weise eine Brennfläche von 1 mm² bis 25 mm², vorzugsweise 25 mm², und überstreicht das Substrat bei einer Substratbreite von beispielsweise 50 cm mit einer Frequenz zwischen 20 bis 4000 Hz, vorzugsweise 500 bis 2000 Hz, woraus sich eine Relativgeschwindigkeit des Brennflecks auf dem Substrat von 10 bis 2000 m/s, vorzugsweise 250-1000 m/s ergibt. Je nach verwendeter Laserleistung, die im allgemeinen 1 kW bis 10 kW beträgt, kann das Substrat mit einer Geschwindigkeit von 0,6 bis 6 m/min unter dem quasistationären, linienförmig aufgeweiteten Laserstrahl verschoben werden.

Als Laser kommen insbesondere UV-Laser in Betracht, darunter solche aus der Gruppe $CO_2$-, XeCl-, $Kr^+$-, ArF-, Nd-Glas- und Rubinlaser.

Zweckmäßigerweise wird bei dem erfindungsgemäßen Verfahren das Trägermaterial auf Temperaturen im Bereich der Transformationstemperatur vorgeheizt, um einerseits vor dem Einbrennen die organischen Dekorbestandteile auszubrennen, und anderseits den Aufbau von thermisch verursachten Spannungen durch partielle Erhitzung des Trägerglases während des Einbrennens zu vermindern.

Die Energiezufuhr für den Dekorbrand erfolgt zweckmäßigerweise mit Hilfe eines Lasers in einer linienförmig begrenzen Energiezufuhrzone, wobei das Aufschmelzen und/oder Einbrennen pro Flächeneinheit des Substrats in der Weise erfolgt, daß zur zeitlichen Begrenzung der Energiezufuhr, bezogen auf eine Flächeneinheit des Substrats, die linienförmige Energiezufuhrzone und/oder das Substrat eine Relativbewegung parallel zur Ebene der Substratoberfläche ausführen.

Die linienförmige Energiezufuhrzone wird durch Ablenkung des Laserstrahles mit einem Drehspiegel erzeugt, der den Laserstrahl mit hoher Frequenz mindestens über die gesamte Breite des Dekors, vorzugsweise über die gesamte Breite des Werkstückes führt. Zweckmäßig wird ein Drehspiegel mit 6 Spiegelflächen verwendet, der mit zehntausend Umdrehungen pro Minute rotiert. Er erzeugt eine Ablenkfrequenz von 1000 Hz. Bei einer Vorschubgeschwindigkeit des Werkstückes von 1 cm pro Minute und mit einer auf 1 cm² aufgeweiteten Bestrahlungsfläche des Lasers wird ein 1 cm breiter Streifen des Werkstückes somit 60000 Mal pro Minute abgetastet. Ist beispielsweise zum Einbrand einer hochschmelzenden Email eine Energie von 300 Ws/cm²erforderlich und ist das Werkstück 100 cm breit, so führt dies bei einer Einbrenndauer von 1 Minute auf eine benötigte Leistung von 0,5 W/cm² des Laserstrahls und eine notwendige Laserleistung von 5 kW, wenn der Durchmesser des nicht aufgeweiteten Laserstrahles 0,1 mm beträgt. Unter den genannten Bedingungen wurden Keramikfarben mit Schmelztemperaturen zwischen 1200°C und 1350°C auf Glaskeramikflächen, die an sich kurzzeitig nur bis maximal 900°C erhitzt werden können, eingebrannt.

Da die Energieverteilung des Brennfleckes" des Laserstrahles einer angenäherten Gaußverteilung entspricht, erzeugt der Laser eine linien- bzw. bandförmige Erhitzungszone, die sich in eine Vorwärmzone, eine Schmelzzone und eine Kühlzone gliedert, welche durch die genannte hochfrequente Ablenkfrequenz des Laserstrahles als quasistationär zu betrachten sind. Bei kontinuierlicher Fortbewegung des Werkstückes unter dem linienförmig aufgeweiteten Laserstrahl erleidet somit jede Stelle der zu dekorierenden Fläche die gleiche "Temperaturgeschichte" und das Dekor wird gleichmäßig eingebrannt.

Vor der Laserbehandlung werden die Dekore nach einem der bekannten Verfahren durch Siebdruck oder als Abziehbilder auf die zu dekorierenden Flächen aufgebracht. Es können keramische Farben, hochschmelzende Schmelzflüsse und Farben, deren Fluß aus dem jeweiligen Trägermaterial besteht, auch in Form von Dickschichtpasten, oder mit temporären organischen Bindemitteln wie Metall-Resinaten oder ähnliche Materialien verarbeitet werden.

Durch geeignete Wahl der Laserleistung, Abtastfrequenz der linienförmigen Einbrennzone und der Vorschubgeschwindigkeit des Werkstückes kann der Einbrennprozeß an die jeweiligen Erfordernisse bzw. den jeweiligen Energiebedarf der aufzuschmelzenden Materialien angepaßt werden. Bei Dekormaterialien, die einer Schutzgas- oder speziellen Atmosphäre während des Aufschmelzprozesses bedürfen, wird durch Schlitzdüsen vor und hinter der Schmelzzone das benötigte Gas oder Gasgemisch der Schmelzzone zugeführt.

Das Verfahren ist nicht auf die Anwendung spezieller Dekorfarben mit kleinem Wärmeausdehnungskoeffizienten beschränkt, sondern kann mit beliebigen Dekormaterialien eingesetzt werden, z.B. auch den üblichen, zur Dekoration von Glas eingesetzten Emailfarben usw., die Wärmeausdehnungskoeffizienten von bis zu $12 \times 10^{-6}$/K aufweisen. Bevorzugt sind jedoch Dekor- bzw. Schichtmaterialien, die einen Schmelzpunkt oder eine Einbrenntemperatur haben, die über oder im Bereich der Erweichungs- bzw.

Transformationstemperatur des Substrats liegt, da diese häufig einen Wärmeausdehnungskoeffizienten gleich oder kleiner dem des Substratmaterials haben, wodurch durch das Aufbrennen der Schicht praktisch keine Vorspannung bzw. eine Druckvorspannung erzeugt wird. Diese Schicht- bzw. Dekormaterialien sind jedoch noch sehr selten anzutreffen.

Das Problem der Anpassung der Wärmedehnungskoeffizienten von Email und Trägermaterial kann dabei bei Gläsern und Glaskeramiken mit kleiner Wärmeausdehnung gemildert oder beseitigt werden, wenn als Emailfluß Gläser oder Keramiken verwendet werden, deren Wärmeausdehnungskoeffizienten mit denen des Trägermaterials möglichst gut übereinstimmen. Im Idealfalle ist als Schmelzfluß der Emails das Glas bzw. die Glaskeramik des Trägers einzusetzen. In diesem Falle ergibt sich automatisch eine Anpassung der Wärmeausdehnungskoeffizienten über den gesamten Temperaturbereich, der bei der Abkühlung nach dem Dekorbrand durchlaufen wird. Da in diesem Idealfalle auch die Elastizitätsmodule von Schmelzfluß und Träger übereinstimmen, verbleiben nur noch Restspannungen, die durch den Einfluß der Farbpigmente auf den Schmelzfluß hervorgerufen werden.

Die Fließtemperaturen sowohl der Emailfarben mit kleinem Wärmeausdehnungskoeffizienten als auch der Emailflüsse aus dem jeweiligen Trägermaterial liegen in der Regel weit über den Transformationstemperaturen der Borosilikatgläser bzw. der Spezialgläser, die als Ausgangsprodukt bei der Glaskeramikherstellung verwendet werden.

Der Einbrannd der Beschichtung kann vorzugsweise während der Abkühlphase eines Temperprozeßes bei erhöhter Temperatur, z.B. bei 300 bis 600°C, vorzugsweise kurz über der Transformationstemperatur der jeweiligen Gläser erfolgen, bei Glaskeramiken z.B. während der Abkühlung nach der Keramisierung.

Das Verfahren ist insbesondere zur Herstellung von beschichteten Glaskeramiken, insbesondere dekorierten Glaskeramikkochflächen geeignet.

Hierbei sind besonders Schichtmaterialien geeignet, die eine hohe Fließtemperatur, insbesondere höher als die höchste Keramisierungstemperatur, haben. Solche Schichtmaterialien können besonders hart und widerstandfähig gegen Beschädigung wie auch gegen durch hohe Nutzungstemperaturen der Glaskeramikplatte bedingte Verfärbungen sein. Vorzugsweise werden Schichtmaterialien verwendet, deren Fließtemperaturen im Bereich von 1200°C bis 1350°C angesiedelt sind. So kommen z.B. bei Glaskeramiken, insbesondere Platten, die Temperaturen bis max. 900°C widerstehen, auch Schichtmaterialien mit Fließtemperaturen im Bereich von 1000°C bis 1350°C zur Anwendung.

Das erfindungsgemäße Verfahren wird anhand schematischer Zeichnungen im folgenden näher erläutert. Es zeigen

Figur 1      eine Vorrichtung zur Durchführung des Verfahrens; und

Figur 2      einen Querschnitt parallel zur Vorschubsrichtung durch eine Glaskeramikplatte während des Einbrennprozesses.

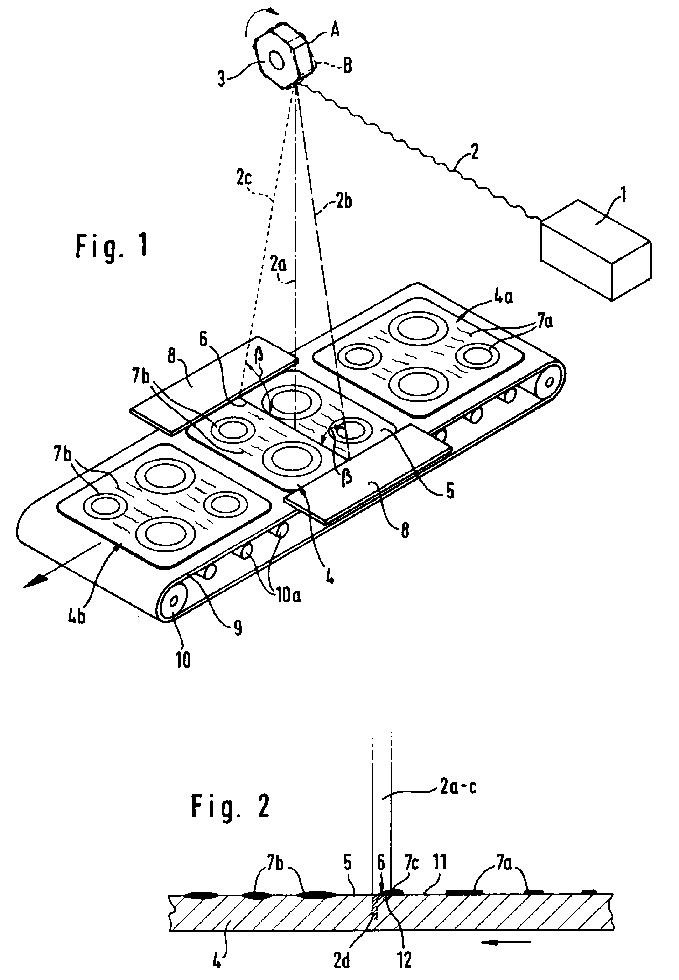

In Figur 1 wird der Strahl 2 (Wellenlinie) eines Lasers 1 auf einen Drehspiegel 3, der mit hoher Geschwindigkeit in Pfeilrichtung gedreht wird und der gerade in Position A ist, gerichtet und von dort (2a, punktgestrichelt) auf die Oberfläche 5 einer Glaskeramikkochfläche 4 gelenkt. Ist der Drehspiegel 3 in Position B (gestrichelt), dann wird der Strahl 2 an den einen Rand der Glaskeramikkochfläche 4 gelenkt (2b, gestrichelt), den anderen Rand der Glaskeramikkochfläche 4 erreicht der Strahl 2 (2c, gepunktet) in einer (nicht dargestellten) Position C des Drehspiegels 3 die gegenüber der Position B nur wenige Grade vorgedreht ist. Durch diese Ablenkung (2b, 2a, 2c) überstreicht der Strahl 2 auf der Oberfläche 5 der Glaskeramikkochfläche 4 eine Linie 6, auf der die Energie des Strahls 2a-c der Glaskeramikkochfläche 4 zugeführt wird. Durch die hohe Drehgeschwindigkeit des Spiegels bildet sich eine bandförmige Zone aus, in der das Dekor bzw. die Beschichtung 7 auf die Glaskeramikkochfläche aufschmilzt bzw. einbrennt.

Der Anfang und das Ende der Linie 6 haben eine andere Energiedichte als die Linienmitte und werden deshalb mittels luftgekühlter Blenden 8 ausgeblendet. Der vom Anfang bez. Ende der Linie 6 mit dem Strahl 2b bzw. 2c gebildete Winkel B ist vorzugsweise nicht kleiner als 85°, wobei der Abstand des Drehspiegels von der Glaskeramik-Oberfläche ca. 1m beträgt.

Zur Durchführung einer Relativbewegung zwischen der Linie 6 und der Glaskeramikkochfläche 4 liegt diese auf einem über Rollen 10 und 10a geführten Transportband 9, mit dem die Glaskeramikkochfläche 4 unter der Linie 6 in Pfeilrichtung mit konstanter Geschwindigkeit verschoben wird.

Frisch beschichtete Glaskeramikkochflächen 4a werden dabei kontinuierlich vom Transportband 9 aufgenommen und als fertige Glaskeramikkochflächen 4b mit eingebrannter Beschichtung 7b vom Transportband 9 wieder abgegeben, Zweckmäßiger Weise ist das Transportband 9 Teil einer Kühlstraße, in der die frisch keramisierten Glaskeramikkochflächen abgekühlt werden.

Figur 2 zeigt einen vergrößerten Ausschnitt einer Glaskeramikkochfläche 4 im Querschnitt. Die Glaskeramikkochfläche 4 wird in Pfeilrichtung mittels des (hier nicht dargestellten) Transportbandes 9 verschoben, so daß die auf die Glaskeramikkochfläche 4 aufgetragene Beschichtung 7a in den Bereich der vom Strahl 2a-c gebildeten Linie 6 kommt und diese als eingebrannte Beschichtung 7b wieder verläßt.

Durch die Verschiebungsgeschwindigkeit des Transportbandes 9 und durch die Energie des Strahls 2 bestimmt erfolgt die Energiezufuhr in die Beschichtung pro Flächeneinheit des Substrats oder der Beschichtung mit einer solchen Intensität und Zeitbegrenzung, daß im wesentlichen nur die erforderliche Erwärmung der Beschichtung 7a und der an diese angrenzende Oberfläche 5 erfolgt, und die Energiezufuhr bereits wieder unterbrochen ist, bevor der Temperaturgradient der Wäremeleitungsfront sich wesentlich bis in das Substratmaterial hineinverlagert hat.

Da Glaskeramiken in der Regel einen niedrigen Wärmeausdehnungskoeffizienten haben, und Beschichtungsmaterialien mit ähnlichem Wärmeausdehnungskoeffizienten im allgemeinen aus ähnlichem, auch hochschmelzendem Material wie die Glaskeramik selbst, bestehen, können bei dem erfindungsgemäßen Verfahren erstmals insbesondere auch solche Beschichtungsmaterialien zum Einsatz kommen, die erst deutlich über der höchsten Keramisierungstemperatur oder der Transformationstemperatur der Glaskeramik schmelzen bzw. fließen. Zur Anwendung können Beschichtungsmaterialien kommen, deren Schmelzpunkt oder Einbrennpunkt im Bereich von 1200°C bis 1350°C liegt, d.h. insbesondere solche Beschichtungsmaterialien, deren Wärmeausdehnungskoeffizient nicht mehr als $2{,}5 \times 10^{-6}$/K, vorzugsweise nicht mehr als $1{,}0 \times 10^{-6}$/K und im günstigsten Fall nur $0{,}5 \times 10^{-6}$/K oder weniger von dem des Substratmaterials entfernt liegt.

Bei Glaskeramikkochflächen haben die Beschichtungsmaterialien dabei meist den größeren Warmeausdehnungskoeffizienten, anders als bei Glas als Substratmaterial, hier werden günstiger Weise Beschichtungen mit einem Wärmeausdehnungskoeffizienten kleiner dem des Glasmaterials verwendet, wodurch eine Druckvorspannung auf die Oberfläche des Glases aufgebracht werden kann.

Werden Glaskeramikkochflächen, die in der Regel bei Temperaturen unter 1000°C keramisiert werden, beschichtet, so können vorteilhafterweise auch Beschichtungsmaterialien mit einer Fließtemperatur im Bereich von 1000°C bis 1350°C verwendet werden.

## Patentansprüche

1. Verfahren zur Herstellung eines mit einem Großflächendekor aus mindestens einer Schicht aus insbesondere keramischer Farbe, Schmelzfluß, Sinterglas, Glasur, Dickschichtfilm oder Resinat versehenen Substrats aus schmelzbarem Material mit geringer Wärmeleitfähigkeit, insbesondere einer Glaskeramik-Kochfläche, wobei das Schichtenmaterial auf die Substratoberfläche aufgebracht und mittels eines linienförmig über die gesamte Breite der zu dekorierenden Fläche aufgeweiteten und längs der Fläche parallel zu Substratoberfläche verschiebbaren Laserstrahls auf das Substrat aufgeschmolzen und die Anordnung dann abgekühlt wird, dadurch gekennzeichnet, daß ein Schichtmaterial verwendet wird, dessen Schmelzfluß einen Wärmeausdehnungskoeffizienten aufweist, welcher sich um nicht mehr als $2{,}5 \times 10^{-6}$/K vom Ausdehnungskoeffizienten des Trägermaterials unterscheidet, wobei nur das Schichtmaterial und die an diese angrenzende Substratoberfläche bis auf eine Tiefe von maximal 10 µm auf die zum Schmelzen des Schichtmaterials erforderliche Temperatur erhitzt wird.

2. Verfahren nach Anspruch 1, dadurch gekennzeichnet, daß ein Schichtmaterial verwendet wird, dessen Schmelzpunkt über der Transformationstemperatur des Substratmaterials liegt.

3. Verfahren nach Anspruch 1, dadurch gekennzeichnet, daß ein Schichtmaterial verwendet wird, dessen Schmelzfluß im wesentlichen einen Schmelzpunkt von der Erweichungs- oder Transformationstemperatur des Substratmaterials aufweist.

4. Verfahren nach Anspruch 3, dadurch gekennzeichnet, daß als Schmelzfluß des Schichtmaterials das Substratmaterial verwendet wird.

5. Verfahren nach einem der vorhergehenden Ansprüche, dadurch gekennzeichnet, daß ein vor der Energiezufuhr chemisch oder thermisch vorgespanntes Substrat verwendet wird.

**6.** Verfahren nach einem der vorhergehenden Ansprüche, dadurch gekennzeichnet, daß das Substrat vor der Energiezufuhr auf Temperaturen im Bereich seiner Transformationstemperatur aufgeheizt wird.

**7.** Verfahren nach einem der vorhergehenden Ansprüche, dadurch gekennzeichnet, daß als Substrat eine Glaskeramik, insbesondere in Plattenform, verwendet wird, und daß das Schichtmaterial eine Fließtemperatur hat, die über der höchsten Keramisierungstemperatur dieser Glaskeramik liegt.

**8.** Verfahren nach Anspruch 7, dadurch gekennzeichnet, daß ein Schichtmaterial mit einer Fließtemperatur im Bereich von 1200°C bis 1350°C verwendet wird.

**9.** Verfahren nach einem der vorhergehenden Ansprüche, dadurch gekennzeichnet, daß als Laser ein UV-Laser verwendet wird.

**10.** Verfahren nach Anspruch 9, dadurch gekennzeichnet, daß die Energie mittels eines Lasers aus der Gruppe $CO_2$-, XeCl-, $Kr^+$-, ArF-, Nd-Glas- und Rubinlaser zugeführt wird.

**11.** Verfahren nach den Ansprüchen 1-9, dadurch gekennzeichnet, daß ein Schichtmaterial verwendet wird, dessen Schmelzfluß einen Wärmeausdehungskoeffizienten aufweist, welcher sich um nicht mehr als 1,0 x $10^{-6}$/K, vorzugsweise um nicht mehr als 0,5 x $10^{-6}$/K, vom Wärmeausdehnungskoeffizienten des Substratmaterials unterscheidet.

**12.** Glaskeramikplatte mit eingeschmolzener Beschichtung, dadurch gekennzeichnet, daß der Wärmeausdehnungskoeffizient der Beschichtung um nicht mehr als 2,5 x $10^{-6}$/K vom Wärmeausdehnungskoeffizienten der Keramikplatte abweicht.

**13.** Glaskeramikplatte mit eingeschmolzener Beschichtung nach Anspruch 12, dadurch gekennzeichnet, daß die Beschichtung eine Fließtemperatur hat, die über der höchsten Keramisierungstemperatur liegt.

**14.** Glaskeramikplatte mit eingeschmolzener Beschichtung nach den Ansprüchen 12 und 13, dadurch gekennzeichnet, daß die Beschichtung einen Schmelzpunkt oder Einbrennpunkt im Bereich von 1200°C bis 1350°C hat.

**15.** Glaskeramikplatte nach einem der Ansprüche 12-14, dadurch gekennzeichnet, daß die Beschichtung eine Email oder Keramikfarbe ist.

**16.** Glaskeramikplatte nach Anspruch 15, dadurch gekennzeichnet, daß die Beschichtung über den größten Teil der Glaskeramikplatte verteilt ist.

**17.** Glaskeramikplatte nach Anspruch 15, dadurch gekennzeichnet, daß die Beschichtung ganzflächig über die Glaskeramikplatte verteilt ist.

## Claims

**1.** Process for producing a substrate which is provided with a large-area decoration comprising at least one layer composed of, in particular, ceramic paint, flux, sintered glass, glaze, thick-layer film or resinate and which is composed of fusible material having low thermal conductivity, in particular a glass-ceramic hob, in which process the layer material is applied to the substrate surface and is fused onto the substrate by means of a laser beam which is expanded linearly over the entire width of the area to be decorated and which can be moved over the area parallel to the surface, and the arrangement is then cooled, characterized in that a layer material is used whose flux has a coefficient of thermal expansion which differs by no more than 2.5 x $10^{-6}$/K from the coefficient of expansion of the base material, only the layer material and the substrate surface adjoining the latter being heated, to a depth of no more than 10 µm, to the temperature necessary to melt the layer material.

**2.** Process according to Claim 1, characterized in that a layer material is used whose melting point is above the transformation point of the substrate material.

**3.** Process according to Claim 1, characterized in that a layer material is used whose flux has essentially a melting point of the softening or transformation point of the substrate material.

4. Process according to Claim 3, characterized in that the substrate is used as flux of the layer material.

5. Process according to one of the preceding claims, characterized in that a substrate is used which is prestressed chemically or thermally before the energy is supplied.

6. Process according to one of the preceding claims, characterized in that the substrate is heated to temperatures in the region of its transformation point before the energy is supplied.

7. Process according to one of the preceding claims, characterized in that a glass ceramic, in particular in plate form, is used as substrate, and in that the layer material has a flow temperature which is above the maximum ceramizing temperature of said glass ceramic.

8. Process according to Claim 7, characterized in that a layer material is used which has a flow temperature in the range from 1200°C to 1350°C.

9. Process according to one of the preceding claims, characterized in that a UV laser is used as the laser.

10. Process according to Claim 9, characterized in that the energy is supplied by means of a laser from the group comprising $CO_2$, XeCl, $Kr^+$, ArF, Nd-glass and ruby lasers.

11. Process according to Claims 1-9, characterized in that a layer material is used whose flux has a coefficient of thermal expansion which differs from the coefficient of thermal expansion of the substrate material by no more than $1.0 \times 10^{-6}$/K, preferably by no more than $0.5 \times 10^{-6}$/K.

12. Glass-ceramic plate with melted-in coating, characterized in that the coefficient of thermal expansion of the coating differs from the coefficient of thermal expansion of the ceramic plate by no more than $2.5 \times 10^{-6}$/K.

13. Glass-ceramic plate with melted-in coating according to Claim 12, characterized in that the coating has a flow temperature which is above the maximum ceramizing temperature.

14. Glass-ceramic plate with melted-in coating according to Claims 12 and 13, characterized in that the coating has a melting point or burn-in point in the range from 1200°C to 1350°C.

15. Glass-ceramic plate according to one of Claims 12-14, characterized in that the coating is an enamel or ceramic paint.

16. Glass-ceramic plate according to Claim 15, characterized in that the coating is distributed over most of the glass-ceramic plate.

17. Glass-ceramic plate according to Claim 15, characterized in that the coating is distributed over the entire surface of the glass-ceramic plate.

**Revendications**

1. Procédé de fabrication d'un substrat pourvu d'une décoration en grande surface formée d'au moins une couche d'une couleur notamment céramique, d'une masse fondue, de verre fritté, de glaçure, d'un film épais ou de résinate, le substrat étant constitué pour sa part d'une matière fusible ayant une faible conductibilité thermique, en particulier une plaque de cuisson vitrocéramique, procédé dans lequel la couche de matière est appliquée sur la surface du substrat et est fondue sur celui-ci à l'aide d'un rayon laser qui est élargi selon une ligne sur toute la largeur de la surface à décorer et peut être déplacé le long de cette surface parallèlement à la surface du substrat, et l'agencement est ensuite refroidi, caractérisé en ce qu'on utilise une couche de matière dont la masse fondue présente un coefficient de dilatation thermique qui ne se différencie pas de plus de $2,5 \times 10^{-6}$/K du coefficient de dilatation de la matière de support, la couche de matière et la surface du substrat qui lui est limitrophe n'étant chauffées que jusqu'à une profondeur de maximum 10 micromètres à la température requise pour faire fondre la couche de matière.

2. Procédé selon la revendication 1, caractérisé en ce qu'on utilise une couche de matière dont le point de fusion est situé au-dessus de la température de transformation de la matière du substrat.

**3.** Procédé selon la revendication 1, caractérisé en ce qu'on utilise une couche de matière dont la masse fondue présente en substance un point de fusion correspondant à la température de ramollissement ou de transformation de la matière du substrat.

**4.** Procédé selon la revendication 3, caractérisé en ce qu'on utilise comme masse fondue pour la couche de matière la matière du substrat.

**5.** Procédé selon l'une quelconque des revendications précédentes, caractérisé en ce qu'on utilise un substrat précontraint par voie chimique ou thermique avant l'application d'énergie.

**6.** Procédé selon l'une quelconque des revendications précédentes, caractérisé en ce que le substrat est chauffé avant l'alimentation en énergie à des températures qui se trouvent dans le domaine de sa température de transformation.

**7.** Procédé selon l'une quelconque des revendications précédentes, caractérisé en ce qu'on utilise comme substrat une matière vitrocéramique, en particulier sous forme de plaque, et la couche de matière a une température de fluage qui se situe au-dessus de la température de céramisation maximum de cette matière vitrocéramique.

**8.** Procédé selon la revendication 7, caractérisé en ce qu'on utilise une couche de matière ayant une température de fluage dans le domaine de 1200 à 1350°C.

**9.** Procédé selon l'une quelconque des revendications précédentes, caractérisé en ce qu'on utilise comme laser un laser UV.

**10.** Procédé selon la revendication 9, caractérisé en ce que l'énergie est acheminée via un laser du groupe des lasers à $CO_2$, à XeCl, à Kr⁺, à Arf, au verre Nd et à rubis.

**11.** Procédé selon les revendications 1 à 9, caractérisé en ce qu'on utilise une couche de matière dont la masse fondue présente un coefficient de dilatation thermique qui ne se différencie pas plus de $1,0 \times 10^{-6}$/K, de préférence pas plus de $0,5 \times 10^{-6}$/K du coefficient de dilatation thermique de la matière du substrat.

**12.** Plaque vitrocéramique à revêtement fondu, caractérisée en ce que le coefficient de dilatation thermique du revêtement ne se différencie pas de plus de $2,5 \times 10^{-6}$/K du coefficient de dilatation thermique de la plaque céramique.

**13.** Plaque vitrocéramique à revêtement fondu selon la revendication 12, caractérisée en ce que le revêtement a une température de fluage qui se situe au-dessus de la température de céramisation maximum.

**14.** Plaque vitrocéramique à revêtement fondu selon les revendications 12 et 13, caractérisée en ce que le revêtement a un point de fusion ou un point de cuisson qui se situe dans le domaine de 1200 à 1350°C.

**15.** Plaque vitrocéramique selon l'une quelconque des revendications 12 à 14, caractérisée en ce que le revêtement est un émail ou une couleur céramique.

**16.** Plaque vitrocéramique selon la revendication 15, caractérisée en ce que le revêtement est réparti sur la plus grande partie de la plaque vitrocéramique.

**17.** Plaque vitrocéramique selon la revendication 15, caractérisée en ce que le revêtement est réparti sur toute la surface de la plaque vitrocéramique.

# Fig. 1

# Fig. 2